# EUROPEAN PATENT APPLICATION

(11) **EP 2 234 367 A1**
(43) Date of publication of application: **29.09.2010**
(21) Application number: 08871328.4
(22) Date of filing: 29.12.2008
(51) Int. Cl.: H04L 29/06

(54) **A RANGE-BASED MEDIA CONTROL METHOD AND DEVICE**

(30) Priority: 29.12.2007 CN 200710306081
(71) Applicant: Huawei Technologies Co., Ltd., Longgang District, Shenzhen Guangdong 518129 (CN)
(72) Inventor: LIN, Yangbo, Shenzhen Guangdong 518129 (CN)
(74) Representative: Epping - Hermann - Fischer
(86) International application number: PCT/CN2008/073836
(87) International publication number: WO 2009/092270

(57) **Abstract**

A range-based media control method includes the following steps: A media gateway (MG) receives from a media gateway controller (MGC) a signal indicating an operation on a media resource, where the signal carries range information requested to be associated with the media resource; and the MG executes the operation on the media resource within a range indicated by the associated range information. An MG and an MGC are also disclosed. With the present invention, the MGC can indicate the requested range of media control to the MG and the MG can return the actual range of media control to the MGC.

## Description

This application claims priority to Chinese Patent Application No. 200710306081.8, filed with the Chinese Patent Office on December 29, 2007 and entitled "Range-Based Media Control Method and Device", which is incorporated herein by reference in its entirety.

### Field of the Invention

The present invention relates to communications technologies, and in particular, to a range-based media control method and device.

### Background of the Invention

The media gateway controller (MGC) and media gateway (MG) are two key components of a packet-switched network with the architecture that the service and bearer are separated. The MGC is in charge of service control and the MG is in charge of media bearer, so that the service control plane is separated from the media bearer plane. Thus, network resources are better shared, equipment upgrade and service expansion are simplified, and the costs of development and maintenance are lowered.

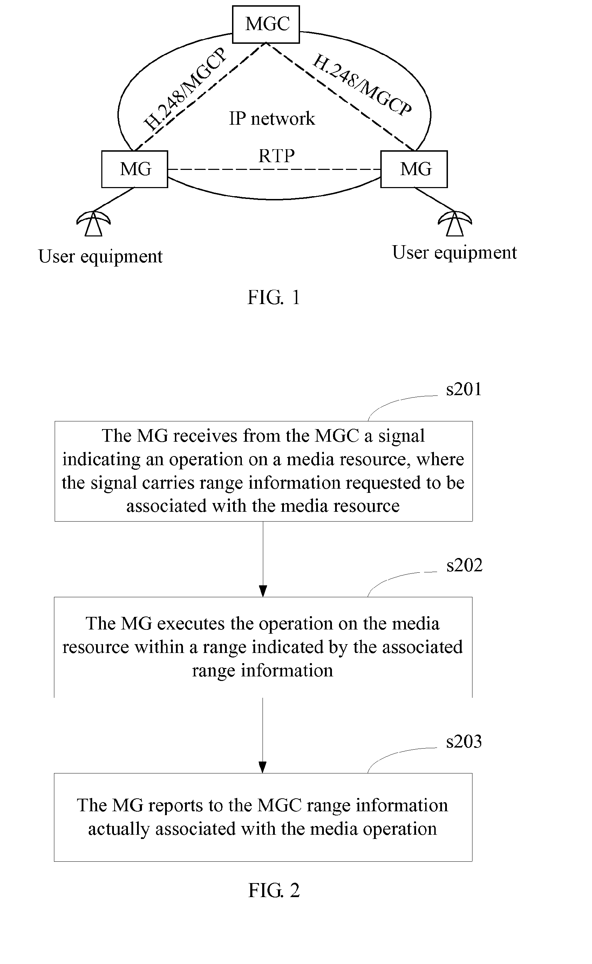

FIG. 1 shows the networking of the MGC and the MG, which communicate through (media) gateway control protocols. At present, protocols that are widely used include the Media Gateway Control Protocol (MGCP) and the Gateway Control Protocol (H.248/MeGaCo), and H.248/MeGaCo is developed from MGCP. Under H.248, for example, resources on MGs are abstracted as terminations, including physical terminations and ephemeral terminations; the physical terminations represent physical entities with semi-permanent existence, such as time division multiplexing (TDM) timeslots, and the ephemeral terminations represent public resources that are requested ephemerally and released after use, such as Real-time Transport Protocol (RTP) streams. A special termination which is referred to as Root termination represents the entirety of an MG. The associations between terminations are abstracted as contexts. A context may include multiple terminations and the relations between terminations are described by a topology. Terminations that are not associated with any other termination are contained in a special context called Null context.

Based on the above abstract connection model, interactions between services and bearers are actually operations on terminations and contexts. Such operations are completed via the request and reply of commands between the MGC and the MG. The commands include Add, Modify, Subtract, Move, AuditValue, AuditCapabilities, Notify, and ServiceChange. Command parameters are also called descriptors which are classified into Property, Signal, Event and Statistic. For convenience, parameters with service relevance are logically aggregated as a package.

The inventor of the present invention finds the following defects in the prior art:
The MGC instructs the MG to start, pause or stop a resource operation, such as tone playing, via a signal. In an application, it is possible that the start, pause or stop of a resource operation needs to be executed within a given range of time or space. For example, a certain signal needs to be started at 2008-08-08 08:08:08; a certain signal needs to be paused at 2008-09-09 09:09:09; a certain signal needs to be stopped at 2008-10-10 10:10:10; a media file needs to be played from its 3'15" to 30'45" or from the 5850^{th} frame to the 55350^{th} frame; the segment from its 10'15" to 30'45" or from the 18450^{th} frame to the 55350^{th} frame of a media file is not yet played so far. In the prior art, however, the start, pause or stop of a signal is instant, which means that, once the MG receives a signal indicating the start, pause or stop of a resource operation, the MG will start, pause or stop the resource operation immediately according to the signal. It is not realizable to execute the operation within a given range of time or space.

### Summary of the Invention

Embodiments of the present invention provide a range-based media control method and device to start, pause or stop a media operation within a given range of time or space.

A range-based media control method includes:
receiving, by an MG, from an MGC a signal indicating an operation on a media resource, where the signal carries range information requested to be associated with the media resource; and
executing, by the MG, the operation on the media resource within a range indicated by the associated range information.

An MG includes:
a transceiving unit, configured to receive from an MGC a signal indicating an operation on a media resource, where the signal carries range information requested to be associated with the media resource, and configured to report an execution result of the media operation to the MGC; and
an executing unit, configured to execute the operation on the media resource within a range indicated by the associated range information.

An MGC includes:
a controlling unit, configured to generate a signal indicating an operation on a media resource, where the signal carries range information requested to be associated with the media resource; and
a transceiving unit, configured to send the signal to an MG and receive an execution result of the media operation, where the execution result is reported by the MG.

Compared with the prior art, the present invention has the following benefits:
The MGC may indicate the requested range of media operations to the MG and the MG may return the actual range of media operations to the MGC. Thus, media operations such as start, pause and stop can be executed within a given range of time or space and therefore media operations are more flexible.

### Brief Description of the Drawings

To better explain the technical solution in the embodiments of the present invention or in the prior art, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative work.
FIG. 1 shows the networking of the MGC and MG in the prior art;
FIG. 2 is a flowchart of a range-based media control method according to an embodiment of the present invention; and
FIG. 3 shows a structure of a range-based media control system according to an embodiment of the present invention.

### Detailed Description of the Invention

The technical solution of the embodiments of the present invention is hereinafter described in detail with reference to the accompanying drawings. It is apparent that the embodiments described herein are only some exemplary embodiments. All other embodiments derived by those skilled in art based on the embodiments herein without creative work are within the scope of protection of the present invention.

The embodiments of the present invention provide a range-based media control method and device to start, pause or stop a media operation within a given range of time or space.

The range-based media control method and device will be described in detail with reference to the accompanying drawings.

An embodiment of the present invention provides a range-based real-time media control method. As shown in FIG. 2, the method includes the following steps:
Step s201: An MG receives from an MGC a signal indicating an operation on a media resource, where the signal carries range information requested to be associated with the media resource.
Step s202: The MG executes the operation on the media resource within the range indicated by the associated range information.
Step s203: The MG reports to the MGC range information actually associated with the media operation.

In the embodiment of the present invention, range information may be associated, during media control operations, such as play, pause, or stop, or adjustment of parameters like speed or bandwidth. The range information includes a list of ranges and optionally the execution time. That is, the range information may include a list of ranges and the execution time or the range information includes a list of ranges. Whether the execution time is delivered is optional. Each element in the range list indicates a range and a range list should include at least one range. Each range includes a range format and a range value.

The range format may be any of the following formats or other extended formats, wherein the default format is normal play time (NPT).

NPT: The absolute position of time relative to the start. For example, "NPT = 1.23-45" means from 1.23 second after start to 45 second after start; "NPT = 6:7:8.9" means from 6 hours 7 minutes 8.9 seconds after start to end; and "NPT = now" means from now to end.

Society of Motion Picture and Television Engineers (SMPTE): a position of time relative to the start and accurate to frames in the format of "hours:minutes:seconds:frames.subframes". The default SMPTE frame speed is 29.97 frames/second and other frame speeds need to be specified. For example "SMPTE-25=0:1:2:3.4-5:6:7:8.9" means 25 frames/second and from 0 hours 1 minute 2 seconds 3 frames 4 subframes after start to 5 hours 6 minutes 7 seconds 8 frames 9 subframes after start; "SMPTE-30=0:1:2:3.4-5:6:7:8.9" means 30 frames/second and from 0 hours 1 minute 2 seconds 3 frames 4 subframes after start to 5 hours 6 minutes 7 seconds 8 frames 9 subframes after start; and "SMPTE=10:20:30:12.3" means 29.97 frames/second and from 10 hours 20 minutes 30 seconds 12 frames 3 subframes after start to end.

Universal time code (UTC): the absolute time described in Greenwich Mean Time (GMT). For example, "UTC=20001122T010203.45Z" means 1 hour 2 minutes 3.45 seconds on November 22, 2000; "UTC=20001122T010203.45Z-" means from 1 hour 2 minutes 3.45 seconds on November 22, 2000 to end.

Frame: a position described in frames relative to the start. For example, "Frame=12345-67890" means from 12345 frames after start to 67890 frames after start and "Frame=112233" means from 112233 frames after start to end.

Byte: a position described in bytes relative to the start. For example, "Byte=10000-90000" means from 10000 bytes after start to 90000 bytes after start and "Byte=50000" means from 50000 bytes after start to end.

Bit: a position described in bits relative to the start. For example, "Bit=80000-720000" means from 80000 bits after start to 720000 bits after start and "Bit=400000" means from 400000 bits after start to end.

The value of a range is a section, covering all valid values between a first value and a second value. The section is by default a semi-open section inclusive of the first value but exclusive of the second value. For example, the time range indicated by "A-B" starts from time A but ends before time B. The section is dependent on the start time in a certain format. If described in frames, with the above "A-B" section, a frame starting before time B will be included in the range even if the frame ends after time B. The section may be in an ascending order or a descending order. In the above "A-B" section, time A may precede time B, for example, in the case of playing a media file in the forward direction, or time A may be later than time B, for example, in the case of playing a media file in the reverse direction.

The optional execution time indicates the actual execution time of the range or range list, which is immediate execution by default. The execution time is generally described in the above UTC format.

In the embodiment, range information may be described by one parameter.

For example, the parameter is named "Range". The type of parameter is character string and the format is "range list; execution time". The format of "range list" is "range element 1, range element 2, ..." and the format of each range element is "range format = range value". For example, "Range = 'NPT = 12-34, 56-78, 90-; 20080808T080808.00Z"'means starting an operation on ranges from the 12^{th} second to the 34^{th} second, from the 56^{th} second to the 78^{th} second, and from the 90^{th} second to end at 2008-08-08 08:08:08.

Range information may also be indicated by multiple parameters. For example, one parameter indicates the range format and may be named Range Format (RF). The type of the parameter may be enumeration or character string. If the type of the parameter is enumeration, the value range is relatively fixed and the implementation of the MGC and MG is relatively easy. But, if the value range is extended, the original definition needs to be revised. If the type of the parameter is character string, the value range is free so that possible character strings need to be agreed between the MGC and the MG in advance, and if the value range is extended, it is only necessary to add to the advance agreement. In the case of enumerable values, the value range includes NPT, SMPTE (29.97 frames/second), SMPTE-30 (30 frames/second), SMPTE-25 (25 frames/second), UTC, Frame and Byte. In the case of character strings, the above enumerable values may be defined or agreed as character strings.

The range value may be described by one parameter, for example, the parameter named Range Value (RV). The type of the parameter is character string, and the format is"first range, second range, ...". The format of each range is "first value-second value". The first value may be earlier or smaller than the second value. The first value may also be later or larger than the second value.

The execution time is described by one parameter which may be named Execution Time (ET). Its type is character string, and its format is UTC.

The execution time parameter may also be combined with the range value parameter into one parameter. The format of the combined parameter, for example, is "first range, second range...; execution time".

With the above embodiment, the technical solution of the present invention may be applied in scenarios where the MGC instructs the MG to control media within a requested range or where the MG reports the actual range of media control to the MGC. The media control includes play, pause or stop operations or adjustment of such parameters as speed or bandwidth. For example:
The above parameters may be carried in a Play signal sent by the MGC to the MG. When the MGC sends Play (Range = "NPT = 12-34, 56-78, 90-; 20080808T080808.00Z"), Play (RF = NPT, RV = "12-34, 56-78, 90-", ET = "20080808T080808.00Z") or Play (RF = NPT, RV = "12-34, 56-78, 90-; 20080808T080808.00Z") to the MG, all the signals indicate that the MGC requests the MG to start delivery of a media resource from the 12^{th} second to the 34^{th} second, from the 56^{th} second to the 78^{th} second, and from the 90^{th} second to end at 2008-08-08 08:08:08. Likewise, the parameters may be used as parameters of a Play signal returned to the MGC by the MG. Either Play (Range = "NPT = 99-") or Play (RF = NPT, RV = "99-") reported by the MG indicates that the actual range of a media delivery operation started by the MG is from the 99^{th} second to end.

In addition, the parameters may be used as parameters of a Pause signal returned by the MG to the MGC. When the MGC sends Pause (Range = $) or Pause (RF = $, RV = $) to the MG, either signal indicates that the MGC requests the MG to pause the delivery of a certain media resource, where the "any" wildcard "$" means the MGC expects the specific range of the pause of media delivery from the MG. Accordingly, the reply of the MG will include Pause (Range = "NPT=1001-") or Pause (RF = NPT, RV = "1001-"), either indicating that the media delivery is paused at the 1001^{st} second. Likewise, the parameters may be used as parameters of a Pause request signal sent by the MGC to the MG. Then, either Pause (Range = "NPT=1000-") or Pause (RF = NPT, RV = "1000-") sent by the MGC indicates that the MGC requests the MG to pause the delivery of a certain media resource at the 1000^{th} second.

The parameters in the request signal from the MGC to the MG and the parameters in the reply signal from the MG to the MGC may be two independently defined suites of parameters or one uniformly defined suite of parameters, where the values of parameters in the uplink and downlink signals are independent from each other.

The parameters may be used as association information when parameters related to media control such as speed and bandwidth are adjusted, indicating the expected range and/or the actual range of execution when adjustment of the parameters is requested. The application of the parameters is like the application in the Play and Pause signals.

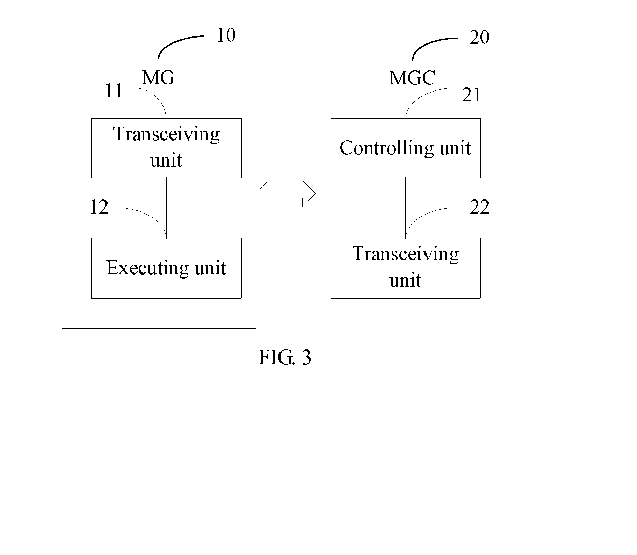

An embodiment of the present invention provides a range-based media control system. As shown in FIG. 3, the system includes an MGC 20 and an MG 10. The MGC 20 is configured to send a signal indicating an operation on a media resource, where the signal carries range information requested to be associated with the media resource. The MG 10 is configured to execute the operation on the media resource within the range indicated by the range information.

The MG 10 specifically includes a transceiving unit 11, configured to receive the signal indicating an operation on a media resource from the MGC, where the signal carries the range information requested to be associated with the media resource, and report the execution result of the media operation to the MGC; and an executing unit 12, configured to execute the operation on the media resource within the range indicated by the associated range information.

The MGC 20 specifically includes: a controlling unit 21, configured to generate the signal indicating an operation on a media resource, where the signal carries the range information requested to be associated with the media resource; and a transceiving unit 22, configured to send the signal to the MG and receive the execution result of the media operation, where the execution result is reported by the MG.

In the embodiment of the present invention, the MGC may indicate the requested range of media control to the MG and the MG may report the actual range of media control to the MGC.

Based on the descriptions of the foregoing embodiments, those skilled in the art will be clear that the embodiments of the present invention may be implemented by hardware or implemented by software on a necessary general hardware platform. Based on such understanding, the technical solution of the present invention may be represented by a software product, which may be stored in a nonvolatile storage medium, such as a compact disk read-only memory (CD-ROM), a USB disk, and a mobile hard disk. The software product includes a number of instructions that enable a computer device (which may be a personal computer, a server or a network device) to execute the method according to the embodiments of the present invention.

Although the technical solution of the present invention has been described in detail through some exemplary embodiments, the invention is not limited to such embodiments. It is apparent that those skilled in the art can make various modifications and variations to the invention without departing from the spirit and scope of the present invention. The invention is intended to cover the modifications and variations provided that they fall within the scope of protection defined by the claims or their equivalents.

## Claims

1. A range-based media control method, comprising:
receiving, by a media gateway (MG), from a media gateway controller (MGC) a signal indicating an operation on a media resource, wherein the signal carries range information requested to be associated with the media resource; and
executing, by the MG, the operation on the media resource within a range indicated by the associated range information.

2. The method of claim 1, wherein the step of executing the operation on the media resource within the range indicated by the associated range information comprises:
executing play, pause, stop, speed adjustment or bandwidth adjustment within the range indicated by the range information.

3. The method of claim 1 or 2, wherein after the step of executing the operation on the media resource within the range indicated by the associated range information, the method further comprises:
reporting, by the MG, actual range information of the media operation to the MGC.

4. The method of claim 3, wherein the range information comprises at least one range, or at least one range and execution time.

5. The method of claim 4, wherein the range comprises a range format and a range value.

6. The method of claim 5, wherein the range format is Normal Play Time (NPT), Society of Motion Picture and Television Engineers (SMPTE) format with a default frame speed, SMPTE format with a frame speed of 25 frames/second, SMPTE format with a frame speed of 30 frames/second, Universal Time Code (UTC) format, Frame format, Byte format or Bit format.

7. The method of claim 5, wherein the range value is a section.

8. The method of claim 4, wherein the range information is described by one parameter of the signal.

9. The method of claim 5, wherein:
the range format, range value, and execution time each are described by one parameter of the signal;
or,
the range format is described by one parameter of the signal and the range value and execution time are described by one parameter apart from the parameter identifying the range format.

10. The method of claim 8 or 9, wherein the requested range information sent by the MGC and the actual range information reported by the MG are indicated by uniform parameters or independent parameters.

11. A media gateway (MG), comprising:
a transceiving unit, configured to receive from a media gateway controller (MGC) a signal indicating an operation on a media resource, wherein the signal carries range information requested to be associated with the media resource and configured to report an execution result of the media operation to the MGC; and
an executing unit, configured to execute the operation on the media resource within a range indicated by the associated range information.

12. A media gateway controller (MGC), comprising:
a controlling unit, configured to generate a signal indicating an operation on a media resource, wherein the signal carries range information requested to be associated with the media resource; and
a transceiving unit, configured to send the signal to a media gateway (MG) and receive an execution result of the media operation, wherein the execution result is reported by the MG.
